Europäisches Patentamt

(19) European Patent Office     (11) Publication number: **0 043 206**

Office européen des brevets     **B1**

(12)     **EUROPEAN PATENT SPECIFICATION**

(45) Date of publication of patent specification: **24.10.84**     (51) Int. Cl.³: **B 32 B 27/08,** B 65 D 81/34,
H 05 B 6/64

(21) Application number: **81302714.1**

(22) Date of filing: **17.06.81**

(54) **Heat and grease resistant containers.**

(30) Priority: **01.07.80 US 164993**

(43) Date of publication of application:
**06.01.82 Bulletin 82/01**

(45) Publication of the grant of the patent:
**24.10.84 Bulletin 84/43**

(84) Designated Contracting States:
**BE DE FR GB IT NL**

(56) References cited:
EP-A-0 009 377
GB-A- 974 445
GB-A-1 456 556
US-A-3 798 103
US-A-3 955 697

W.F. CHRISTOPHER: "POLYCARBONATES",
publ. by CHAPMAN & HALL Ltd., 1962,
LONDON (GB), pages 10, 87-89
Ullmanns Encyklopädie der techn. Chemie,
Vol. 19 (1980) pg. 269-270
W.F. Christopher, D.W. Fox Polycarbonates
(1962) pg. 87-89

(73) Proprietor: **MOBIL OIL CORPORATION**
**150 East 42nd Street**
**New York New York 10017 (US)**

(72) Inventor: **Marano, John Paul, Jr.**
**23 Laurel Road**
**Princeton New Jersey (US)**
Inventor: **Farag, Maya Swamy**
**83 Hidden Lake Drive**
**North Brunswick New Jersey (US)**

(74) Representative: **West, Alan Harry et al**
**Mobil Court 3 Clements Inn**
**London WC2A 2EB (GB)**

## Description

This invention is concerned with trays and containers which can be used for heating foods, especially fatty foods, in microwave ovens.

Polystyrene sheet, both in its foamed and unfoamed forms, has been used for forming food containers. Laminates of polystyrene for example, as described in US—A—3,684,633. Containers that have been thermoformed from laminate structures of styrenic substrate coated· with a surface layer of polycarbonate (in which the polycarbonate optionally contains styrenic monomer and in which an ABS layer is optionally bonded to the other surface of the styrenic substrate) are described in GB—A—1,456,556. Polystyrene containers, however; are melted by hot fats and cannot be used to package fat-containing foods that are to be· heated in a microwave oven. Similarly, containers made from poly(p-methylstyrene) will suffer from the same disadvantage unless the polymer is irradiated, as described in US—A—4,205,114. In general, it has been found that containers made from polymers with a softening temperature below 88°C (190°F) are not resistant to hot fats when heated in a microwave oven.

It has now been found, however, that containers made from laminates of heat resistant film and p-methylstyrene polymers are resistant to hot fats when heated in a microwave oven. In this way, a heat and fat resistant container may be made without the irradiation step described in US—A—4,205,114.

According to the present invention, there is provided a container which is resistant to hot fat when heated in a microwave oven and which comprises a laminate of a heat resistant thermoplastic film having a softening point above 177°C (350°F) and a substrate of a polymer sheet the heat resistant film being on the interior surface of the container, characterized in that the substrate is a sheet of a foamed or unfoamed uncrosslinked poly(p-methylstyrene) or uncrosslinked copolymer of p-methylstyrene and from 1 to 10 weight percent of a conjugated diene.

The exterior or substrate of the shaped articles or containers of the invention may be of an uncrosslinked homopolymer or copolymer of p-methylstyrene. Homopolymers of p-methylstyrene may be derived from mixtures of methylstyrene isomers rich in p-methylstyrene, for example mixtures containing at least 90 weight percent, preferably 95—99 weight percent, p-methylstyrene and less than 0.1 weight percent O-methylstyrene, with the balance being m-methylstyrene. A typical mixture contains, by weight, about 95 percent p-methylstyrene, about 5 percent m-methylstyrene, and about 0.05 percent o-methylstyrene. These mixtures may be obtained by the catalytic dehydrogenation of the mixtures of ethylmethyl benzene isomers described in US—A—4,086,287. The mixtures themselves are described in DE—OS 2821589.

Copolymers of p-methylstyrene contain from 1 to 10 weight percent of units of a conjugated diene, for example butadiene and isoprene.

The p-methylstyrene polymer may be used in the form of a foamed sheet. Methods of forming foamed sheet are described in US—A—3,444,283. The preferred method is direct injection extrusion, for example the extrusion operation described in US—A—3,619,445, which describes the complete direct injection extrusion foam lines (U.S. Application Serial No. 506,836 referred to in US—A—3,619,445, is now US—A—3,444,283).

The p-methylstyrene polymer may alternatively be used as an unfoamed sheet that may be formed by any suitable method, such as extrusion through a slot die. The sheet can be oriented or non-oriented.

The uncrosslinked foamed or unfoamed p-methylstyrene polymer sheet is laminated with a film of heat resistant thermoplastic polymer. By a heat resistant film, there is meant a film with a softening point above 177°C (350°F) so that the film is capable of resisting and containing hot grease or cooking fat or oil at this temperature. The preferred film is polyacrylonitrile film, which can be produced as described in US—A—4,066,731. Other heat resistant thermoplastic polymers can, however, be used to form the film for lamination including polyesters and polyamides. In general, the film thickness can be between 12 to 50 $\mu$m (0.5 and 2 mils).

The heat resistant film can be laminated to the foamed or unfoamed p-methylstyrene polymer sheet by any suitable method, such as by adhesives or surface treatment with corona discharge followed vacuum forming. The shaped articles produced by thermoforming the foamed or unfoamed laminate can vary widely. Typical shapes include trays, tubs, bowls and cups. Such shaped articles can be used for packaging foods and, particularly, for packaging foods containing fats.

The efficacy of the laminates of this invention in preventing melt-through by fats under microwave oven conditions was demonstrated in the following test procedure. A heat resistant film (in one case of polyacrylonitrile, PAN, and in another polyethylene terephthalate, PET) was placed upon a piece of uncrosslinked poly(p-methylstyrene), PPMS (97% para isomer) with a softening point below 88°C (190°F) representing the substrate polymer. A piece of uncooked bacon was placed upon the heat resistant film. The resultant assembly was then placed in a microwave oven for three minutes to cook the bacon.

Using this test procedure, the assemblies were tested. In both cases, there was no melt-through by hot bacon fat.

TABLE

| Example | Substrate | Type | Heat resistant film softening pt. above 177°C |
|---|---|---|---|
| 1 | PPMS | Foamed | PAN |
| 2 | PPMS | Foamed | PET |

## Claims

1. A container which is resistant to hot fat when heated in a microwave oven and which comprises a laminate of a heat resistant thermoplastic film having a softening point above 177°C (350°F) and a substrate of a polymer sheet the heat resistant film being on the interior surface of the container, characterized in that the substrate is a sheet of foamed or unfoamed uncrosslinked poly(p-methylstyrene) or uncrosslinked copolymer of p-methylstyrene and from 1 to 10 weight percent of a conjugated diene.

2. A container according to claim 1, in which the heat resistant film is polyacrylonitrile film.

3. A container according to claim 1, in which the heat resistant film is polyethylene terephthalate film.

4. A container according to any one of claims 1 to 3, in which the substrate is a foamed sheet of uncrosslinked poly(p-methylstyrene).

## Patentansprüche

1. Behälter, der gegen heißes Fett beständig ist, wenn er in einem Mikrowellenofen erhitzt wird, und der ein Laminat aus einer wärmebeständigen thermoplastischen Folie mit einem Erweichungspunkt von mehr als 177°C (350°F) und einem Substrat aus einem Polymerblatt umfaßt, wobei die wärmebeständige Folie auf der Innenfläche des Behälters angeordnet ist, dadurch gekennzeichnet, daß das Substrat ein Blatt aus einem geschäumten oder ungeschäumten unvernetzten Poly(p-methylstyrol) oder einem unvernetzten Copolymeren von p-Methylstyrol mit von 1 bis 10 Gew.-% eines konjugierten Diens ist.

2. Behälter nach Anspruch 1, bie dem die wärmebestandige Folie eine Polyacrylnitrilfolie ist.

3. Behäleter nach Anspruch 1, bei dem die wärmebeständige Folie eine Polyethylenterephthalatfolie ist.

4. Behälter nach einem der Ansprüche 1 bis 3, bei dem das Substrat ein geschäumtes Blatt aus einem nichtvernetzten Poly(p-methylstyrol) ist.

## Revendications

1. Un récipient qui est résistant à la graisse chaude lorsqu'on le chauffe dans un four à micro-ondes et quie consiste en un stratifié d'un film thermoplastique résistant à la chaleur ayant un point de remollissement de plus de 177°C (350°F) et d'un substrat en feuille de polymère, le film résistant à la chaleur étant sur la surface intérieure du récipient, caractérisé en ce que le substrat est une feuille de poly(p-méthylstyrène) non réticulé ou de copolymère de p-méthylstyrène et de a 1 10% en poids d'un diène conjugué, expansés ou non.

2. Un récipient selon la revendication 1, dans lequel le film résistant à la chaleur est un film de polyacrylonitrile.

3. Un récipient selon la revendication 1, dans lequel le film résistant à la chaleur est un film de téréphtalate de polyéthylène.

4. Un récipient selon l'une quelconque des revendications 1 à 3, dans lequel le substrate est une feuille expansée de poly(p-méthylstyrène) non réticulé.